# EUROPÄISCHE PATENTANMELDUNG

(11) **EP 1 055 991 A1**
(43) Veröffentlichungstag der Anmeldung: **29.11.2000**
(21) Anmeldenummer: 00110668.1
(22) Anmeldetag: 19.05.2000
(51) Int. Cl.: G06F 1/28, H04L 12/10, G05B 23/02

(54) **Vorrichtung zur elektronischen Überwachung des Versorgungsstromes von an einen Bus angeschlossenen Baugruppen**

(30) Priorität: 21.05.1999 DE 19923569
(71) Anmelder: PHOENIX CONTACT GmbH & Co. Kg, 32825 Blomberg (DE)
(72) Erfinder: Behr, Thorsten, Dipl.-Ing., 32805 Horn-Bad Meinberg (DE); Grewe, Harald, Dipl.-Ing., 33175 Bad Lippspringe (DE)
(74) Vertreter: Herden, Andreas F.

(57) **Zusammenfassung**

Die Erfindung betrifft eine Vorrichtung zur elektronischen Überwachung des Versorgungsstromes von an einen Bus angeschlossene Baugruppen, insbesondere zur Überwachung des Versorgungsstromes von Busteilnehmern eines Automatisierungsbussystems.

Der Erfindung liegt die Aufgabe zugrunde, eine Vorrichtung zur elektronischen Überwachung des Versorgungsstromes von an einen Bus angeschlossene Baugruppen bereitzustellen, welche einerseits bei Bedarf eine sichere Trennung von der Versorgungsspannung durchführt und gleichzeitig die Diagnosefähigkeit zum Zwecke der Fehlersuche aufrecht erhält.

Dies erreicht die Erfindung dadurch, daß die Vorrichtung zumindest eine Einrichtung zur Erfassung und zumindest eine Einrichtung zur Begrenzung und/oder Abschaltung des Versorgungsstromes aufweist.

Dabei spricht die Einrichtung zur Abschaltung des Versorgungsstromes auf den Wert des erfaßten Versorgungsstrom an, womit sichergestellt ist, daß die Energieversorgung für andere Baugruppen des Automatisierungsbusses, welche bezüglich der Versorgungsspannung parallel geschaltet sind, nicht ausfällt, wodurch zumindest ein beschränkter Betrieb der Anlage aufrechterhalten bleibt und damit auch eine Fehlerdiagnose möglich bleibt.

## Beschreibung

Die Erfindung betrifft eine Vorrichtung zur elektronischen Überwachung des Versorgungsstromes von an einen Bus angeschlossene Baugruppen, insbesondere zur Überwachung des Versorgungsstromes von Busteilnehmern eines Automatisierungssystems.

Heutige Automatisierungssysteme, d.h. Steuer- und Datenübertragungssysteme, weisen im allgemeinen eine Vielzahl von elektronischen Baugruppen auf, welche alle mit elektrischer Energie versorgt werden müssen. Zu diesem Zweck sind die einzelnen Baugruppen, beispielsweise die Busteilnehmer mittels eines zentralen Netzteils parallel an eine Spannungsversorgung angeschlossen. Ein in einem Busteilnehmer auftretender Kurzschluß oder eine auftretende Überlast kann zur Folge haben, daß die Spannungsversorgung zusammenbricht und somit auch die anderen angeschlossenen Baugruppen nicht weiter mit Energie versorgt werden und damit ausfallen. Der Datenverkehr im Automatisierungsbussystem kommt zum Erliegen, was letztlich den Totalausfall der Anlage zur Folge hat. Eine Fehlersuche, d.h. eine Lokalisierung des Fehlerortes ist nur dadurch möglich, daß die einzelnen Baugruppen aus dem System entfernt und einzeln überprüft werden, was sehr zeitintensiv ist.

Um den Totalausfall des Systems zu verhindern, werden häufig die Baugruppen segment- oder abschnittsweise an eine Spannungsversorgung angeschlossen, wobei ein einzelnes Segment mit einer Schmelzsicherung oder einem Sicherumgsautomat abgesichert ist. In diesem Fall muß jedoch das speisende Netzteil in der Lage sein, die Trennung des betroffenen Segments von der Versorgung bei Bedarf sicher durchführen zu können. Das Auslösen der Sicherung kann jedoch unter Umständen Schwierigkeiten bereiten, solange sich der abzusichernde Zweig im Überlastfall befindet, jedoch noch kein Kurzschluß vorliegt.

Aufgabe der Erfindung ist somit, eine Vorrichtung zur elektronischen Überwachung des Versorgungsstromes von an einen Bus angeschlossene Baugruppen bereitzustellen, welche einerseits bei Bedarf eine sichere Trennung von der Versorgungsspannung durchführt und gleichzeitig die Diagnosefähigkeit zum Zwecke der Fehlersuche aufrecht erhält.

Diese Aufgabe wird schon durch eine Vorrichtung mit den Merkmalen des Anspruchs 1 und mit einem Automatisierungsbussystem gemäß den Ansprüchen 15 und 16 gelöst.

Vorteilhafte Weiterbildungen der Erfindung sind in den Unteransprüchen angegeben.

Um das Auftreten eines Fehlers, das heißt einer Überlast oder eines Kurzschlusses innerhalb einer Baugruppe oder einer Verbindung zwischen den Baugruppen sicher erkennen zu können, umfaßt die erfindungsgemäße Vorrichtung eine Einrichtung zur Erfassung des fließenden Versorgungsstromes. Weiterhin weist die Vorrichtung eine Einrichtung zur Begrenzung und/oder zur Abschaltung des Versorgungsstromes auf, welche im Ansprechen auf den erfaßten Versorgungsstrom arbeitet und somit sicherstellt, daß die Energieversorgung für andere Baugruppen des Automatisierungsbusses, welche bezüglich der Versorgungsspannung parallel geschaltet sind, nicht ausfällt, womit zumindest ein beschränkter Betrieb der Anlage aufrechterhalten bleibt und damit auch eine Fehlerdiagnose trotz des Auftretens einer Überlast oder eines Kurzschlusses möglich ist. Stellt die Einrichtung zur Erfassung des Versorgungsstrom beispielsweise einen unzulässig erhöhten Versorgungsstrom fest, so wird der Versorgungsstrom für die der Vorrichtung nachgeschalteten und zugeordneten Baugruppe im Ansprechen darauf abgeschaltet oder zumindest begrenzt.

Erfindungsgemäß kann dabei eine Baugruppe eine beliebige Komponente oder ein beliebiges Gerät sein, welche beziehungsweise welches zum Aufbau eines Automatisierungssystems verwendet werden kann.

Erstmalig ist es mit der Erfindung möglich, Bussegmente im Störungsfall oder beim Anfahren rückwirkfrei An- und Abzukoppeln mit vollem Erhalt der Diagnosefunktion, da durch das Abtrennen der Baugruppe, die beispielsweise defekt ist oder eine defekte zugeordnete Verbindungsleitung aufweist, nur diese eine Baugruppe oder ein einzelnes Segment der Anlage mit mehreren Baugruppen von der Versorgungsspannung abgetrennt wird, der Rest der Anlage aber in Betrieb bleibt.

Um einerseits die Diagnosemöglichkeit weiter zu verbessern und andererseits eine Kommunikation der erfindungsgemäßen Vorrichtung mit der Steuerung des Automatisierungssystems bereitzustellen, kann die Vorrichtung an den Automatisierungsbus angeschaltet sein. Damit kann die erfindungsgemäße Vorrichtung durch die Steuerung des Systems beispielsweise zum Abschalten einer Baugruppe, insbesondere eines Busteilnehmers veranlaßt werden. Dies bedeutet eine starke Verbesserung der Sicherheit derartiger Automatisierungsbussysteme, da beispielsweise funktionsuntüchtige Busteilnehmer, welche auf die üblichen Steuerbefehle nicht mehr reagieren, über die Steuerung abgeschaltet werden können. Weiterhin kann die Steuerung jederzeit den zur Baugruppe fließenden Versorgungsstrom abrufen und somit frühzeitig eventuell sich entwickelnde Überlasten erkennen und daraufhin notwendige Maßnahmen vor dem Ausfall des Busteilnehmers oder der Baugruppe veranlassen.

Um eine hohe Flexibilität der erfindungsgemäßen Vorrichtung zur Anpassung an alle erdenklichen Anfordernisse bereitzustellen, kann die Parametrierung der Abschaltung, insbesondere der Auslösestrom und/oder die Abschaltcharakteristik, das heißt die Abschaltkennlinie manuell und/oder über den Bus erfolgen. Damit ist es beispielsweise auch möglich, während des Betriebs der Anlage das Ansprechen der erfindungsgemäßen Vorrichtung auf den erfaßten Versorgungstrom oder die erfaßte elektrische Last abzuändern bzw. kann zentral die Vorrichtung auf geänderte Bedingungen, beispielsweise auf einen Austausch einer Baugruppe mit veränderter Versorgungsspannunganforderung neu eingestellt werden.

Zum Zwecke der abänderbaren Einstellung kann die erfindungsgemäße Vorrichtung eine Speichereinrichtung umfassen, in welcher beispielsweise der Grenzwert des Versorgungsstromes, das heißt der Wert, bei oder bei dessen Überschreitung die Einrichtung den Versorgungsstrom abschaltet oder der Versorgungsstrom begrenzt wird, als Auslösestromwert ablegbar ist. In der Speichereinrichtung können ferner die Abschaltkennlinie oder auch minimaler, maximaler und momentaner Wert des Versorgungsstromes abgespeichert werden, wobei diese Werte beispielsweise bei einer Diagnose an der Vorrichtung oder beispielsweise einem Diagnoseprogramm über den Automatisierungsbus zur Verfügung stehen. Zum Zwecke der Erfassung eines zeitlichen Verlaufs des Versorgungsstroms können zusätzlich den jeweiligen Stromwerten zugeordnete Zeitmarken mit abgespeichert werden. Weiterhin können diese Werte auch von der Steuerung jederzeit abgerufen werden.

Zur Unterstützung der Fehlersuche und zur Bereitstellung einer einfachen Kontrollmöglichkeit kann vorgesehen sein, die bezeichneten Versorgungsstromwerte mittels einer Anzeigeeinrichtung am Gerät oder an einer diesem zugeordneten Anzeige ablesbar zu machen.

Um ein unbeabsichtigtes Wiedereinschalten des Versorgungsstromes zu verhindern, wird die Vorrichtung nach Ansprechen der Abschaltung oder der Begrenzung automatisch verriegelt und kann nur manuell oder je nach Ausführungsform auch über den Bus mittels eines Resets aufgehoben werden. Dies ist insbesondere deshalb von Bedeutung, damit eine ausgeschaltete Baugruppe nicht unbeabsichtigt wieder aufgeschaltet wird, was unter Umständen Folgeschäden nach sich ziehen könnte.

Vorteilhafterweise kann die erfindungsgemäße Vorrichtung auch zur Erfassung von Erdschlüssen eingerichtet sein.

Um eine flexible Anpassung an alle erdenklichen Einsatzmöglichkeiten der erfindungsgemäßen Vorrichtung bereitzustellen, kann die Vorrichtung ein Netzteil umfassen, um beispielsweise eine Ein- bzw. Dreiphasenwechselspannung an die üblicherweise von einem Busteilnehmer benötigte Gleichspannung oder Gleichspannungen anzupassen. Mit dem zusätzlichen Merkmal der Busanschaltung der erfindugsgemäßen Vorrichtung ergibt sich somit in vorteilhafter Weise ein busfähiges Netzteil, in welchem beispielsweise mittels der Steuerung über den Bus oder auch manuell einzelne oder alle bereitgestellten Spannungen ein- bzw. ausgeschaltet werden können. Werden Buslogik und Gerätelogik (z.B. Sensorik oder Aktorik) eines Busteilnehmers getrennt versorgt, läßt sich beispielsweise für den Fall, daß ein Kurzschluß in der Gerätelogik aufgetreten ist, diese gezielt mittels einer erfindungsgemäßen Vorrichtung ausschalten, womit die Busanschaltung des Busteilnehmers weiterhin verfügbar bleibt und somit der Busverkehr auch im betroffenen Segment aufrecht erhalten werden kann.

Zur Integration der erfindungsgemäßen Vorrichtung in ein Not-Aus-System kann diese einen Not-Aus-Eingang aufweisen, über den die Vorrichtung zum Abschalten des Versorgungsstromes veranlaßt werden kann. Weiterhin kann die Vorrichtung derart eingerichtet sein, daß sie im Ansprechen auf zumindest einen sicherheitsbezogenen Ausgang, beispielsweise ein Signal eines Temperaturwächters, eines Feuchtesensors, eines Näherungsschalters, eines Überspannungssensors, eines Überlastsensors oder eines Feuer- und/oder eines Rauchmelders die Versorgungsspannung abschaltet. Die erfindungsgemäße Vorrichtung läßt sich damit hervorragend in ein beliebiges Not-Aus-System integrieren, wobei die Versorgungsspannung sowohl über äußere Eingänge als auch mittels Steuersignalen über den Bus geschaltet werden kann.

Zur Erhöhung der Diagnosemöglichkeit kann die Vorrichtung zur Rückmeldung der Abschaltung oder der Begrenzung des Versorgungsstromes an das Steuersystem eingerichtet sein. Die Rückmeldung, insbesondere über den Automatisierungsbus, kann dabei ein Datum zur Identifizierung der Vorrichtung und/oder der ihr zugeordneten zumindest einen Baugruppe umfassen. Auf diese Weise kann das System den Fehlerort genau oder zumindest den Abschnitt bestimmten, in welchem sich beispielsweise ein Kurzschluß ereignet hat, wenn eine Vorrichtung für mehrere Baugruppen, beispielsweise Busteilnehmer, die Überwachung vornimmt. Hierdurch vereinfacht sich die Fehlersuche erheblich beziehungsweise kann unter Umständen automatisch vom System selbst durchgeführt werden.

Die erfindungsgemäße Vorrichtung läßt sich, wie schon erwähnt, in einem Automatisierungsbussystem, welches wenigstens eine Steuerung, einen Automatisierungsbus und Busteilnehmer umfaßt, vorteilhaft verwenden. Beispielsweise kann in einem Abschnitt des Systems, der mehrere Busteilnehmer umfaßt, für die Spannungsversorgung dieser Busteilnehmer eine erfindungsgemäße Vorrichtung angeordnet sein, welche den Busteilnehmern vorgeschaltet ist und diese Busteilnehmer in Bezug auf ihre Versorgungsspannung parallel angeordnet sind. In diesem Fall überwacht eine einzelne erfindungsgemäße Vorrichtung die Versorgungsspannung mehrerer Busteilnehmer. Die Diagnosemöglichkeit ist in diesem Fall auf den gesamten Abschnitt beschränkt. Der Auftritt einer Überlast in einem der parallel geschalteten Busteilnehmer hat durch das Ansprechen der erfindungsgemäßen Vorrichtung , d.h. dem Trennen von der Versorgungsspannung zur Folge, daß alle Teilnehmer abgeschaltet werden.

Ist jedoch jedem Busteilnehmer im Automatisierungsbussystem eine erfindungsgemäße Vorrichtung bezüglich seiner Versorgungsspannung vorgeschaltet, so kann gezielt bei einem Kurzschluß oder einer Überlast an einem bestimmten Busteilnehmer dieser einzelne Busteilnehmer abgeschaltet und dieser gezielt als Fehlerort identifiziert werden. Vorteilhafterweise sind dabei die erfindungsgemäßen Vorrichtungen an den Automatisierungsbus angeschlossen. Fällt der Busteilnehmer beim Abschalten der Versorgungsspannung aus, so kann beispielsweise die dem Busteilnehmer zugeordnete erfindungsgemäße Vorrichtung über den Bus der Steuerung die notwendigen Informationen über den Fehlerort bereitstellen.

Ist der Automatisierungsbus ein serieller, beispielsweise ein Bus nach EN 50254, können die erfindungsgemäßen Vorrichtungen zumindest in einem Abschnitt des Systems alle an einen gemeinsamen Busstich angeschlossen sein. Sind die den jeweiligen Vorrichtungen zugeordneten Busteilnehmer auch an einen gemeinsamen Busabschnitt angeschlossen, der sich jedoch vom Busstich der erfindungsgemäßen Vorrichtungen unterscheidet, so bleibt die Diagnosefähigkeit für die erfindungsgemäßen Vorrichtungen unabhängig von den jeweiligen Busteilnehmern erhalten, da ein Abschalten des den Busteilnehmern zugehörigen Busabschnittes keine Auswirkungen auf den Busstich hat, an welchen die erfindungsgemäßen Vorrichtungen am Bus angeschlossen sind. Somit kann das System einen Ausfall von Busteilnehmern, beispielsweise in einem Lokalabschnitt vollständig und eindeutig erfassen und das Automatisierungsbussystem umkonfigurieren, so daß ein Weiterbetrieb der Anlage ermöglicht wird.

Die Erfindung wird im folgenden durch das Beschreiben einiger Ausführungsformen unter Zugrundelegen der anliegenden Zeichnungen erläutert, wobei
- Fig. 1: in einem Blockschaltbild eine Ausführungsform der erfindungsgemäßen Vorrichtung zeigt;
- Fig. 2: einen Abschnitt eines Automatisierungsbussystems darstellt, in welchem eine erfindungsgemäße Vorrichtung angeordnet ist; und
- Fig. 3: einen Abschnitt eines Automatisierungsbussystems zeigt, in welchem mehrere erfindungsgemäße Vorrichtungen angeordnet sind.

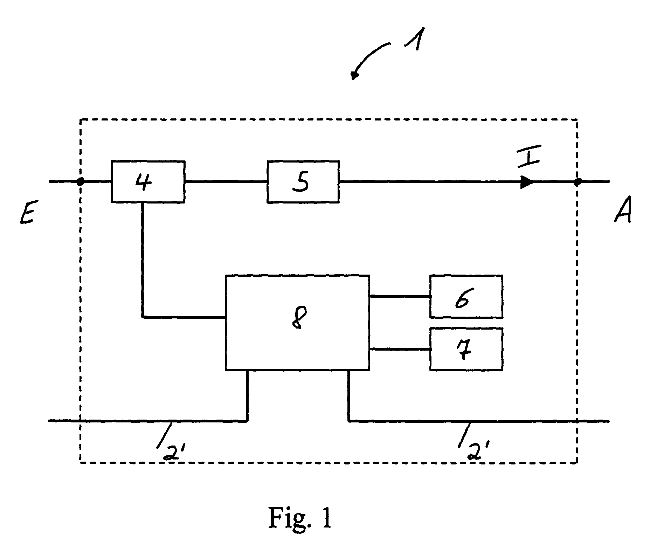

Eine beispielhafte Ausführungsform der erfindungsgemäßen Vorrichtung 1 zur elektronischen Überwachung des Versorgungsstromes von an einen Bus angeschlossene Baugruppen ist in Fig. 1 gezeigt. Grundsätzlich weist sie einen Eingang E auf, an welchem die Versorgungsspannung anliegt. Die Vorrichtung umfaßt eine Einrichtung 4 zur Erfassung des Versorgungsstromes I. Die Vorrichtung erhält in nicht dargestellter Weise ihren Betriebsstrom auch über den Eingang E. Neben der Einrichtung 4 ist eine zweite Einrichtung 5 umfaßt, mit welcher der Versorgungsstrom I am Ausgang A unterbrochen werden kann. An diesem Ausgang ist die zugeordnete Baugruppe, beispielsweise ein Busteilnehmer, oder auch mehrere Baugruppen mit ihrem bzw. ihren Versorgungsspannungseingang(en) angeschlossen.

Je nach Ausführungsform kann die Einrichtung 5 zum Abschalten des Versorgungsstromes als Relais, als Schutz- und/oder als Halbleiterschalter ausgebildet sein. Es ist in einer Ausführungsform der Erfindung auch möglich, daß die Vorrichtung zur Begrenzung des Versorgungsstromes eingerichtet ist. Dies läßt sich beispielsweise mit einem Halbleiterschalter als Einrichtung 5 realisieren.

Die Einrichtung 5 wird im Ansprechen auf die Strommessung in der Einrichtung 4 gesteuert. In der vorliegenden beispielhaften Ausführungsform ist ein Mikroprozessor 8 für die Steuerung verantwortlich. Vorliegend ist die erfindungsgemäße Ausführungsform an den Automatisierungsbus 2' angeschlossen. Somit können alle Vorgänge in der erfindungsgemäßen Vorrichtung zusätzlich durch die Steuerung des Automatisierungssystems über den Bus veranlaßt, aber auch protokolliert werden. Die Anschaltung der Vorrichtung an den Automatisierungsbus ist in herkömmlicher Weise realisiert. So können einerseits Befehle des Steuersystems an die Vorrichtung weitergegeben werden, beispielsweise die Abschaltung des Versorgungsstromes durch Betätigen des Leistungsschalters 5 durchzuführen und andererseits wird die Übermittlung von Daten, beispielsweise des momentanen Wertes des Versorgungsstromes zur Steuerung ermöglicht. Zusätzlich läßt sich die Parametrierung der Abschaltung, beispielsweise der Grenzwert des Versorgungsstromes, bei welchem der Versorgungsstrom abgeschaltet oder begrenzt wird und die Abschaltkennlinie, das heißt, den zeitliche Verlauf der Abschaltung, statt wie in einer einfacheren Ausführungsform der Erfindung manuell, hier zusätzlich von der Steuerung über den Bus durchführen.

Die Erfindung weiterbildend, umfaßt die beschriebene Ausführungsform in Fig. 1 weiterhin eine Speichereinrichtung 7, in welcher beispielsweise minimaler, maximaler, momentaner Wert und/oder der Grenzwert des Versorgungsstromes abgespeichert ist. Die abgespeicherten Daten werden in einer Anzeigeeinrichtung 6 am Gerät angezeigt oder können über den Bus zum Steuersystem übertragen und dort verarbeitet werden.

Nach dem Ansprechen des Leistungsschalters 5, der in der beschriebenen Ausführungsform ein Halbleiterschalter ist, ist der Ausgang A der Vorrichtung 1 verriegelt. Dies bedeutet, daß nur über einen speziellen Resetbefehl über den Bus oder einen entsprechenden Schalter an der Vorrichtung diese wieder in einen betriebsfähigen Zustand übergeführt werden kann.

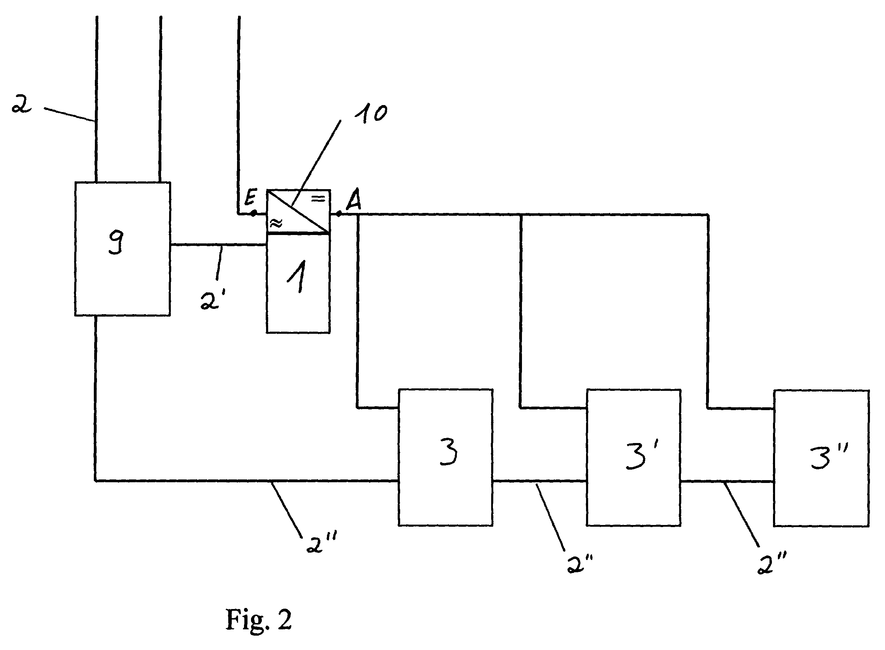

Bei der in Fig. 1 gezeigten Ausführungsform liegt am Eingang E die von der Baugruppe benötigte Gleichspannung direkt an. In einer weiteren beispielhaften, in Fig. 2 dargestellten Ausführungsform der Erfindung umfaßt die Vorrichtung 1 weiterhin ein Netzteil 10, womit die hier am Eingang anliegende Einphasen- oder Dreiphasenwechselspannung in die benötigte Gleichspannung beziehungsweise in die benötigten Gleichspannungen umgewandelt wird.

In diesem Sinne arbeitet die erfindungsgemäße Vorrichtung als busgesteuerte elektronische Sicherung, welche eine Vielzahl von Anwendungsmöglichkeiten aufweist. Ist die Vorichtung zur Verarbeitung einer Dreiphasenwechselspannung eingerichtet, weist die erfindungsgemäße Vorrichtung drei Spannungsausgänge auf, welche getrennt überwacht werden, d.h. für jeden Ausgang ist jeweils eine Einrichtung zur Überwachung des jeweiligen Versorgungsstromes und eine Einrichtung zum Abschalten und/oder zum Begrenzen des Versorgungsstromes umfaßt.

Die Vorrichtung weist beispielhaft in einer sicherheitsgerichteten Ausführungsform und in den Figuren nicht dargestellte zwei Not-Aus-Eingänge auf, über welche die Vorrichtung zum Abschalten des Versorgungsstromes der ihr zugeordneten Baugruppe oder Baugruppen veranlaßt werden kann. Beispielsweise befindet sich in der Arbeitsumgebung eines Schweißroboters ein Näherungsschalter und ein Rauchmelder. Deren sicherheitsbezogene Ausgänge sind zu zugeordneten Eingängen der erfindungsgemäßen Vorrichtung geführt, so daß der dem Roboter zugeordnete Busteilnehmer und damit der Roboter selbst bei der Erfassung von Rauch oder der Erfassung einer Person in der Arbeitsumgebung des Roboters durch Abtrennen des Busteilnehmers von der Versorgungsspannung abgeschaltet wird.

Nach dem vollständigen Abschalten eines Busteilnehmers, d.h. dem Abschalten der Geräte- und der Buslogik, kann dieser am Datentransfer über den Bus nicht mehr teilnehmen. Je nach verwendetem Automatisierungsbus ist eine Anpassung des Busses notwendig. Hierfür ist die erfindungsgemäße Vorrichtung zur Rückmeldung dieser Abschaltung der Versorgungsspannung der betreffenden Baugruppe an das Steuersystem eingerichtet. Diese Rückmeldung umfaßt zumindest ein Datum zur Identifizierung der Vorrichtung und/oder der ihr zugeordneten Baugruppe im beschriebenen Beispiel des Busteilnehmers des Schweißroboters. Hierdurch wird dem Steuersystem direkt mitgeteilt, welche Baugruppe ausgefallen ist und das Steuersystem paßt einerseits den Bustransfer auf die geänderten Umstände an und kann andererseits andere Teilnehmer, welche vom Schweißroboter abhängen und deshalb momentan nicht benötigt werden, in einen Ruhezustand bringen. Beispielsweise können auf diese Weise gezielt betroffene Lokalbusabschnitte des Automatisierungssystems abgeschaltet werden.

Die Verwendung der erfindungsgemäßen Vorrichtung in einem Automatisierungsbussystem ist beispielhaft in Fig. 2 in einem Blockschaltbild im Ausschnitt dargestellt. Das Automatisierungssystem umfaßt eine nicht dargestellte Steuerung, einen Automatisierungsbus 2 sowie Busteilnehmer 3, 3*'* und 3*''*. Die Vorrichtung 1 ist über einen Buskoppler 9 an den Bus 2 angeschlossen. Im vorliegenden Fall weist die Vorrichtung zur elektronischen Überwachung des Versorgungsstromes einen Spannungseingang auf, an welchem eine Dreiphasenwechselspannung anliegt. Demnach umfaßt die Vorrichtung weiterhin ein Netzteil 10, welches diese Wechselspannung in eine Gleichspannung umwandelt, mit welcher die Versorungsspannungseingänge der Teilnehmer 3, 3*'* und 3*''* gespeist werden. Die Versorgungsspannungseingänge der Busteilnehmer liegen parallel am Ausgang A der erfindungsgemäßen Vorrichtung und die Busteilnehmer sind im Busabschnitt 2*''* an den Automatisierungsbus angeschlossen.

Die Vorrichtung 1 zur elektronischen Überwachung des Versorgungsstromes ist demnach für die Überwachung des Versorgungsstromes der drei gezeigten Busteilnehmer 3, 3*'* und 3*''* zuständig. Tritt in einem der genannten Busteilnehmer ein Kurzschluß oder eine Überlast auf, so werden durch die erfindungsgemäße Vorrichtung alle drei Busteilnehmer durch das Trennen von der Versorgungsleitung abgeschaltet. Die genannten Busteilnehmer können nicht mehr am Datenverkehr über den Bus teilnehmen. Dies gilt jedoch nicht für die Vorrichtung 1, die beispielsweise dem Steuerungssystem über die Busanschaltung 2*'* den Ausfall melden kann. Somit bleibt die Diagnose des Systems erhalten.

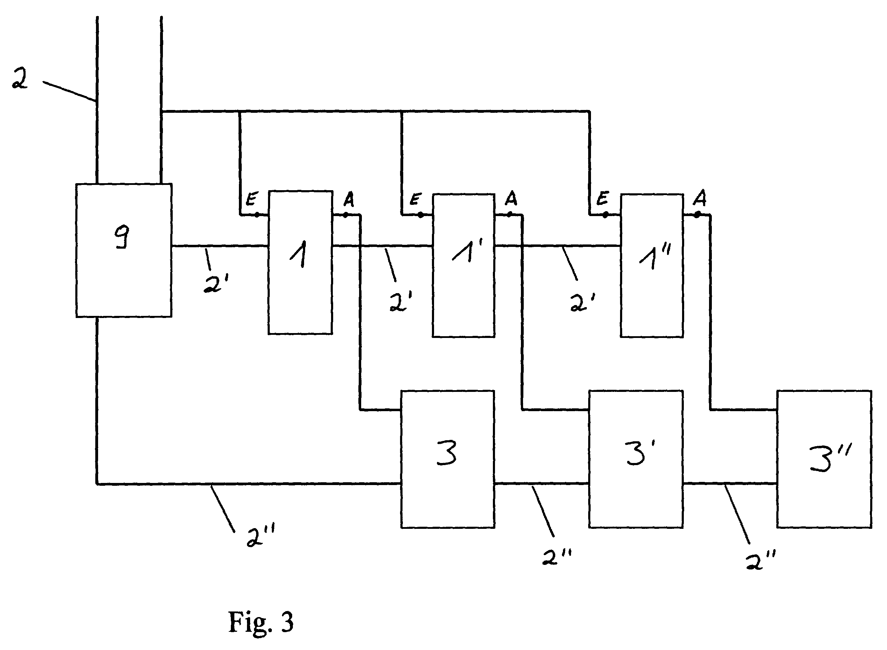

In Fig. 3 ist eine weitere Art der Verwendung der erfindungsgemäßen Vorrichtung zur elektronischen Überwachung des Versorgungsstromes von einer an einen Bus angeschlossenen Baugruppe abschnittsweise gezeigt. Wieder sind an einen Bus 2 drei Busteilnehmer 3, 3', 3'' über den Busabschnitt 2'' angeschlossen. Jeder Busteilnehmer wird über eine erfindungsgemäße Vorrichtung 1, 1', 1'' an die Spannungsversorgung, die im gezeigten Fall die von den Teilnehmern benötigte Gleichspannung direkt an den Spannungseingängen der Vorrichtungen abgibt, angeschlossen. Mittels des Buskopplers 9 geht ein Busstich 2*'* vom eingehenden Bus 2 ab, wobei alle drei erfindungsgemäßen Vorrichtungen 1, 1*'*, 1*''* am Bussystemstich 2*'* angeschlossen sind. Tritt beispielsweise ein Kurzschluß oder eine Überlast am letzten Busteilnehmer 3*''* auf, so schaltet die zugeordnete erfindungsgemäße Vorrichtung 1*''* dessen Spannungsversorgung ab. Die beiden anderen Busteilnehmer 3 und 3*'* bleiben somit beide angeschaltet und sind weiterhin über den Bus ansprechbar, wenn der letzte aktive Busteilnehmer zum Schließen der Busschleife beim Auftreten eines Fehlers in dem nachgeschalteten Busteilnehmer eingerichtet ist. Weiterhin kann in dem dargestellten Automatisierungsbussystem der fehlerhafte Teilnehmer genau identifiziert werden, da eine Vorrichtung (1, 1*'*, 1*''*) jeweils nur für einen zugeordneten Busteilnehmer zuständig ist.

Fällt der Busteilnehmer 3*'* aufgrund eines Kurzschlusses oder einer Überlast durch das Ansprechen der zugeordneten Vorrichtung 1' aus, d.h. dieser Busteilnehmer wird von der Versorgungsspannung getrennt, so ist der Datentransfer zum Busteilnehmer 3*''* unterbrochen.

Erfindungsgemäß kann deshalb die Vorrichtung 1*'* in einer vorteilhaften Ausführungsform beispielsweise für den Fall, daß kein harter Kurzschluß vorliegt, die Versorgungsspannung des defekten Busteilnehmers 3*'* nicht vollkommen abtrennen, sondern nur den Versorgungsstrom begrenzen, so daß unter Umständen die Kommunikation des Busteilnehmers 3*''* mit dem Steuersystem des Automatisierungsbussystems aufrechterhalten werden kann.

In einer nicht dargestellten Ausführungsform ist die erfindungsgemäße Vorrichtung zur Erfassung eines Erdschlusses eingerichtet. Hierbei wird der Differenzstrom zwischen Plus und Minus der Versorgungsleitung erfaßt und im Ansprechen auf diesen Differenzstrom bei Überschreiten eines vorgegebenen Wertes der Versorgungsstrom unterbrochen.

In einer besonderen Ausführungsform der Erfindung, insbesondere für serielle Automatisierungsbusse, weist die Vorrichtung (1, 1', 1'') eine Einrichtung zum Überbrücken der Busschnittstelle des ihr zugeordneten Busteilnehmers auf. Nach dem Abschalten des Busteilnehmers kann die Vorrichtung mittels der bezeichneten Einrichtung den Busbetrieb trotz des Ausfalls des Busteilnehmers sicherstellen. Weiterhin ist es natürlich auch möglich, mittels System-Steuer-Signalen über den Bus, die Vorrichtung zum Überbrücken des Busteilnehmers zu veranlassen. Hierzu ist die erfindungsgemäße Vorrichtung in Reihe mit dem ihr zugeordneten Busteilnehmer am seriellen Bus angeordnet, wobei zusätzlich die Vorrichtung eine Busumgehung aufweist, die bei Bedarf aktiviert werden kann.

Die Erfindung ist prinzipiell auf alle Automatisierungsbussysteme anwendbar und insbesondere nicht auf die beispielhaft aufgeführten seriellen Bussysteme beschränkt. Weiterhin liegt es im Rahmen der Erfindung, die erfindungsgemäße Vorrichtung in die Baugruppe selbst, beispielsweise in den Busteilnehmern zu integrieren.

## Patentansprüche

1. Vorrichtung (1, 1', 1')) zur elektronischen Überwachung des Versorgungsstromes von an einen Bus angeschlossene Baugruppen, insbesondere zur Überwachung des Versorgungstromes von Busteilnehmern (3, 3', 3'') eines Automatisierungsbussystems, umfassend zumindest eine Einrichtung (4) zur Erfassung und zumindest eine Einrichtung (5) zur Begrenzung und/oder Abschaltung des Versorgungsstromes (I).

2. Vorrichtung nach Anspruch 1,
dadurch gekennzeichnet, daß
die Vorrichtung (1, 1', 1'') eine Einrichtung zur Abschaltung an den Bus (2, 2') umfaßt.

3. Vorrichtung (1,1', 1'') nach einem der Ansprüche 1 oder 2, dadurch gekennzeichnet, daß
die Parametrierung der Abschaltung und/oder Begrenzung, insbesondere der Grenzwert des Versorgungsstroms und/oder die Abschaltcharakteristik manuell und/oder über den Bus (2, 2') erfolgt.

4. Vorrichtung (1, 1', 1'') nach einem der Ansprüche 1 bis 3, dadurch gekennzeichnet, daß
die Vorrichtung eine Speichereinrichtung (7) umfaßt, in welcher minimaler, maximaler, momentaner Wert und/oder Grenzwert des Versorgungsstromes ablegbar ist.

5. Vorrichtung (1, 1', 1'') nach der Anspruch 4,
dadurch gekennzeichnet, daß
die abgespeicherten Daten zu einer Anzeigeeinrichtung (6) der Vorrichtung und/oder über den Bus (2, 2') zum Steuersystem des Automatisierungsbussystem übertragen werden.

6. Vorrichtung (1, 1', 1'') nach einem der Anspruch 1 bis 5, dadurch gekennzeichnet, daß
die Vorrichtung nach Ansprechen der Einrichtung (5) zur Begrenzung und/oder Abschaltung des Versorgungsstromes (I) verriegelt ist.

7. Vorrichtung (1, 1', 1'') nach Anspruch 6 ,
dadurch gekennzeichnet, daß
manuell und/oder über den Bus (2, 2') ein Reset an der Vorrichtung (1, 1',1'') durchführbar ist.

8. Vorrichtung nach einem der Ansprüche 1 bis 7,
dadurch gekennzeichnet, daß
die Vorrichtung (1) zur Erfassung eines Erdschlußes eingerichtet ist.

9. Vorrichtung nach einem der Ansprüche 1 bis 8,
dadurch gekennzeichnet, daß
die Vorrichtung (1) ein Netzteil (10) umfaßt.

10. Vorrichtung (1, 1', 1'') nach einem der Ansprüche 1 bis 9, dadurch gekennzeichnet, daß
die Vorrichtung zumindest einen NOT-AUS-Eingang aufweist, über welchen die Vorrichtung zum Abschalten des Versorgungsstromes (I) veranlaßt wird.

11. Vorrichtung (1, 1', 1'') nach einem der Ansprüche 1 bis 10, dadurch gekennzeichnet, daß
im Ansprechen auf zumindest einen sicherheitsbezogenen Ausgang und/oder im Ansprechen auf Steuerungssignale über den Bus (2, 2') die Vorrichtung die Versorgungsspannung abschaltet.

12. Vorrichtung (1, 1', 1'') nach einem der Ansprüche 1 bis 11, dadurch gekennzeichnet, daß
die Vorrichtung (1, 1', 1'') zur Rückmeldung des Ansprechens der Einrichtung (5) zur Begrenzung und/oder zur Abschaltung des Versorgungsstromes (I) an das Steuersystem eingerichtet ist.

13. Vorrichtung (1, 1', 1'') nach einem der Anspruch 12,
dadurch gekennzeichnet, daß
die Rückmeldung zumindest ein Datum zur Identifizierung der Vorrichtung (1, 1', 1'') und/oder der ihr zugeordneten zumindest einen Baugruppe (3, 3', 3'') umfaßt.

14. Verwenden zumindest einer Vorrichtung (1, 1', 1'') nach einem der vorstehenden Ansprüche in einem NOT-AUS-System für ein Automatisierungsbussystem.

15. Automatisierungsbussystem, wenigstens umfassend eine Steuerung, einen Automatisierungsbus (2, 2', 2'') und Busteilnehmer (3, 3', 3''), wobei zumindest in einem Abschnitt des Systems für die Versorgungsspannung der Busteilnehmer eine Vorrichtung (1) nach einem der Ansprüche 1 bis 13 angeordnet ist, die den Busteilnehmern vorgeschaltet ist und die Busteilnehmer bezüglich ihrer Versorgungsspannung parallel geschaltet sind.

16. Automatisierungsbussystem, wenigstens umfassend eine Steuerung, einen Automatisierungsbus (2, 2', 2'') und Busteilnehmer (3, 3', 3''), wobei zumindest in einem Abschnitt des Systems jedem Busteilnehmer bezüglich seiner Versorgungsspannung eine Vorrichtung (1, 1', 1'') nach einem der Ansprüche 1 bis 12 vorgeschaltet ist und die Vorrichtungen parallel an eine Versorgungsspannung angeschlossen sind.

17. Automatisierungsbussystem nach Anspruch 16,
dadurch gekennzeichnet, daß
die Vorrichtungen (1, 1', 1'') an den Automatisierungsbus (2, 2'') angeschlossen sind.

18. Automatisierungsbussystem nach Anspruch 17,
dadurch gekennzeichnet, daß
der Automatisierungsbus seriell aufgebaut ist und die Vorrichtungen (1, 1', 1'') nach einem der Ansprüche 1 bis 13 des Abschnitts alle an einen gemeinsamen Busstich (2') angeschlossen sind.

19. Automatisierungsbussystem nach Anspruch 18,
dadurch gekennzeichnet, daß
die den jeweiligen Vorrichtungen (1, 1', 1'') zugeordneten Busteilnehmer (3, 3'', 3'') an einen gemeinsamen Busabschnitt (2'') angeschlossen sind.

20. Automatisierungsbussystem nach Anspruch 18 und 19, dadurch gekennzeichnet, daß
die Vorrichtungen (1, 1', 1'') und die Busteilnehmer (3, 3', 3'') jeweils an unterschiedliche Lokalbusabschnitte (2', 2'') des Automatisierungsbusses angeschlossen sind.

21. Automatisierungsbussystem nach einem der Ansprüche 18 bis 20,
dadurch gekennzeichnet, daß
die Vorrichtung (1, 1', 1'') eine Einrichtung zum Überbrücken der Busschnittstelle des ihr zugeordneten zumindest einen Busteilnehmers aufweist.
